# EUROPÄISCHE PATENTSCHRIFT

(11) **EP 2 928 065 B1**
(45) Veröffentlichungstag und Bekanntmachung des Hinweises auf die Patenterteilung: **25.04.2018**
(21) Anmeldenummer: 14162645.7
(22) Anmeldetag: 31.03.2014
(51) Int. Cl.: H02P 1/04, H02P 1/26, H02P 23/00, H02P 23/02

(54) **Verfahren zum Betreiben eines Motorsystems mit einer Treiberschaltung und einem Motor**
Method for operating a motor system with a driver circuit and a motor
Procédé de fonctionnement d'un système de moteur doté d'un circuit d'excitation et d'un moteur

(43) Veröffentlichungstag der Anmeldung: 07.10.2015
(73) Patentinhaber: Siemens Aktiengesellschaft, 80333 München (DE)
(72) Erfinder: Benecke, Marcel, 39108 Magdeburg (DE); Burger, Josef, 92546 Schmidgaden (DE); Fritsch, Andreas, 92245 Kümmersbruck (DE); Kaluza, Peter, 92286 Rieden (DE); Kepka, Alexander, 90427 Nürnberg (DE)

(56) Entgegenhaltungen:
- EP-A1- 0 092 370
- EP-B1- 2 060 000
- WO-A1-2011/085805
- US-A- 4 697 132

## Beschreibung

Die Erfindung betrifft ein Verfahren zum Betreiben eines Motorsystems mit einer Treiberschaltung und einem Motor und weiterhin ein solches Motorsystem.

Motorsysteme werden mit Einheiten versehen, die einen sanften Anlauf des Motors ermöglichen. Dadurch wird ein ruckartiges Anfahren des Motors, z.B. bei sofortigem Anlegen der maximalen Betriebsspannung, vermieden. Dazu wird der Motor üblicherweise mit einer Treiberschaltung versehen, die in geeigneter Weise, z.B. mit einer Phasenanschnittsteuerung, durch eine Steuereinheit angesteuert wird, um ein langsames Ansteigen der Spannung, die dem Motor zugeführt wird, während einer Anschaltphase zu gewährleisten. Die Treiberschaltung weist üblicherweise Leistungshalbleiterschaltelemente auf, die einen Teil der dem Motor bereitgestellten Leistung aufnehmen und diese in Verlustwärme umwandeln. Die Treiberschaltung kann beispielsweise in Gestalt eines Drehstromstellers ausgebildet sein.

Um den Leistungsverlust in der Treiberschaltung zu reduzieren, wird nach der Einschaltphase, d.h. bei Erreichen der maximalen Ansteuerung des Motors, die Treiberschaltung überbrückt, so dass die Verlustleistung in der Treiberschaltung, d.h. in deren Leistungshalbleitern, unterbunden wird. Dadurch wird die Verlustleistung im Dauerbetrieb, insbesondere bei Nennlast des Motors, erheblich reduziert.

Wenn die Treiberschaltung überbrückt ist, wird der Motor üblicherweise mit der maximalen verfügbaren Spannung angesteuert. Physikalisch bedingt reduziert sich bei einem Betrieb des Motors in einem Teillastbereich, d.h. einem Bereich, in dem die an dem Motor anliegende Last geringer ist als eine Nennlast, der von dem Motor aufgenommene Strom nicht im gleichen Maß. Dadurch entstehen im Motor höhere Wärmeverluste als nötig, so dass mehr Energie zum Betreiben des Motors benötigt wird als notwendig. Wird der Motor bei Motorsystemen, bei denen keine Überbrückung der Treiberschaltung möglich ist, im Nennlastbereich betrieben, treten im Allgemeinen hohe Verluste in den Leistungshalbleitern der Leistungsschaltung auf.

Aus der EP 2 060 000 B1 ist ein Verfahren zum Betreiben eines Motorsystems mit einer Treiberschaltung und einem Motor bekannt, bei dem die Treiberschaltung während einer Einschaltphase betrieben wird, um einen Sanftanlauf des Motors auszuführen. In einer Normalbetriebsphase ist die Treiberschaltung überbrückbar. Dabei wird in der Normalbetriebsphase die Treiberschaltung abhängig von einer Last, mit der der Motor betrieben wird, überbrückt. Die Last, mit der der Motor betrieben wird, wird detektiert, indem eine Messung eines Stroms durch den Motor durchgeführt wird. Die Strommessung ermöglicht das Ermitteln der Leistungsaufnahme des Motors, die wiederum zu der Last, die an dem Motor anliegt, in Beziehung steht. Nach dem Beenden der Einschaltphase wird überprüft, ob die Last, mit der der Motor betrieben wird, größer oder kleiner als ein Schwerlastwert ist. Für den Fall, dass die Last, mit dem Motor betrieben wird, kleiner als der Schwerlastwert ist, wird der Motor mit der Treiberschaltung angesteuert. Die Steuereinheit steuert dann abhängig von der ermittelten Last an den Motor die Treiberschaltung an, so dass dem Motor nur eine Leistung zur Verfügung gestellt wird, die zum Betreiben der an den Motor angelegten Last ausreichend ist. Dies kann durch Phasenanschnittsteuerung erfolgen, wobei durch diese die effektive Spannung, die an dem Motor angelegt wird, reduziert wird, so dass die Leistungsaufnahme des in Teillast betriebenen Motors geringer ist als bei einer überbrückten Treiberschaltung, bei der der Motor mit einer von einer Wechselstromquelle bereitgestellten Maximalspannung betrieben wird. Ist die Last größer als der Schwerlastwert, wird die Überbrückungsschaltung angesteuert.

Insbesondere bei einem zyklischen Betrieb, bei dem der Motor mit wechselnden Lasten betrieben wird, führt das aus der EP 2 060 000 B1 beschriebene Vorgehen zu einem permanenten Hin- und Herschalten zwischen dem Betrieb mit der Treiberschaltung und dem Betrieb mit der Überbrückungsschaltung. Dieses Vorgehen kann zum einen die Komponenten belasten, zum anderen wird das Energiesparpotential nur zum Teil ausgenutzt.

Die EP 0 092 370 A1 offenbart eine Motorsteuerung zum Starten und Betreiben eines mit Wechselstrom betriebenen Motors mit hoher Effizienz. Diese umfasst eine Leistungssteuervorrichtung mit Schaltmitteln, die dem Motor zugeführte Wechselströme steuern, und Steuermittel, die einen Nicht-Leitungswinkel des Motors entsprechend Steuerspannungen von entweder einer Überwachungseinrichtung des Wirkungsgrads oder einer Soft-Start-Steuerung steuern. Durch diese wird die von dem Motor erzeugte Spannung während des Nicht-Leitens der Schaltmittel überwacht. Falls die Spannung unterhalb eines Schwellenwerts fällt, wird der Nicht-Leitungswinkel reduziert. Der Nicht-Leitungswinkel ist dabei unabhängig von einem Leistungsfaktor des Elektromotors.

Die WO 2011/085805 A1 offenbart ein Verfahren und eine Vorrichtung zum Betreiben eines Asynchronmotors mit gesteigerter Effizienz. Bei diesem wird eine Steuergröße, wie z.B. der Steuerwinkel, in Abhängigkeit eines der berechneten Wirkleistung zugeordneten Bereichs derart verändert, dass der Steuerwinkel beginnend von einem für den jeweiligen Bereich der Wirkleistung festgelegten Startwert verändert wird, bis ein vorbestimmtes Kriterium für die Blindleistung erreicht ist.

Die US 4,697,132 A offenbart ein Verfahren und eine Vorrichtung zur Reduktion des Spannungsabfalls bei einem elektrischen Stromverteilungssystem während des Startens eines mehrphasigen Elektromotors. Der Spannungsabfall während des Startens und der Verlust eines Start-Drehmoments wird durch das Verbinden von Kondensatoren über die Statorwindungen des Motors während der Aktuierung eines Startkontakts erzielt. Dadurch kann in der Folge der Leistungsfaktor erhöht und die Scheinleistung verringert werden.

Es ist Aufgabe der Erfindung, ein Verfahren zum Betreiben eines Motorssystems und ein Motorsystem anzugeben, bei denen ein Sanftanlauf des Motors realisiert ist und bei dem die Leistungsaufnahme des Motors besser reduziert werden kann.

Diese Aufgaben werden gelöst durch ein Verfahren gemäß den Merkmalen des Patentanspruchs 1 sowie ein Motorsystem gemäß den Merkmal des Patentanspruchs 11. Vorteilhafte Ausgestaltungen ergeben sich aus den abhängigen Patentansprüchen.

Gemäß einem ersten Aspekt ist ein Verfahren zum Betreiben eines Motorssystems mit einer Treiberschaltung und einem Motor vorgesehen. Die Treiberschaltung wird während einer Anschaltphase betrieben, um einen Sanftanlauf des Motors auszuführen. Die Treiberschaltung ist in einer Normalbetriebsphase in Abhängigkeit von einer Last, mit der der Motor betrieben wird, mit einer Überbrückungsschaltung überbrückbar. Erfindungsgemäß erfolgt in der Normalbetriebsphase ein Wechsel zwischen dem Betrieb der Treiberschaltung und dem Betrieb der Überbrückungsschaltung in Abhängigkeit von einem Leistungsfaktor des Motors und einer Scheinleistung.

Durch diese Vorgehensweise lässt sich die Spannung zum Betrieb des Motors beim Betrieb mit der Treiberschaltung für die aktuell anliegende Last optimieren. Dieser Betriebszustand stellt einen sog. Energie-optimierten Betrieb dar. Gleichzeitig wird eine Optimierung der Umschaltung zwischen dem Betrieb der Treiberschaltung und dem Betrieb der Überbrückungsschaltung bereitgestellt. Die Verwendung des Leistungsfaktors des Motors und der aktuell vom Motor abgegebenen Scheinleistung anstelle des Stroms zur Bestimmung der aktuell an dem Motor anliegenden Last ermöglich sowohl die Berücksichtigung von schnellen als auch von langsamen Laständerungen, wodurch sich eine verbesserte Steuerung des Motors im Hinblick auf eine Energieoptimierung und einen materialschonenden Betrieb ergibt.

Es ist zweckmäßig, wenn der Leistungsfaktor und die Scheinleistung als Stellgrößen in einem Regelkreis beim Betrieb der Treiberschaltung verarbeitet werden. Durch den Regelkreis kann eine Optimierung der im Betrieb des Motors anzulegenden Spannung beim Betrieb der Treiberschaltung erfolgen.

In einer weiteren Ausgestaltung ist vorgesehen, dass der Leistungsfaktor zur Entscheidung, ob der Motor mit der Treiberschaltung oder der Überbrückungsschaltung betrieben wird, verarbeitet wird. Hierzu kann beispielsweise eine Schwellwertbetrachtung zugrunde gelegt werden, anhand der festgelegt wird, welche der beiden Betriebsmodi (1. Betrieb mit Treiberschaltung, um zu bewirken, dass die effektive Spannung, die an dem Motor angelegt wird, reduziert wird, so dass die Leistungsaufnahme des mit Teillast betriebenen Motors geringer ist als bei einer überbrückten Treiberschaltung oder 2. Betrieb mit Überbrückungsschaltung, bei der die Treiberschaltung überbrückt ist und der Motor mit einer konstanten Spannung betrieben wird) zur Anwendung kommt.

Es kann weiterhin vorgesehen sein, dass ein Wechsel von dem Betrieb der Treiberschaltung zu dem Betrieb der Überbrückungsschaltung bei einem ersten, vordefinierten Leistungsfaktor erfolgt und ein Wechsel von dem Betrieb der Überbrückungsschaltung zu dem Betrieb der Treiberschaltung bei einem zweiten, vordefinierten Leistungsfaktor erfolgt, wobei der erste Leistungsfaktor höher gewählt ist als der zweite Leistungsfaktor. Hierdurch ist eine Schalthysterese für den Wechsel zwischen den beiden Betriebsmodi vorgesehen, durch die insbesondere bei einem zyklischen Betrieb des Motors ein permanentes Hin- und Herschalten unterbunden wird. Es kann beispielsweise vorgesehen sein, dass der erste Leistungsfaktor bei etwa 80 % des Nennleistungsfaktors des Motors liegt. Der zweite Leistungsfaktor kann bei etwa 60 % der Nennleistung des Motors liegen. Grundsätzlich können natürlich die Werte für den ersten und zweiten Leistungsfaktor in Abhängigkeit der Gegebenheiten, d.h. der Dimensionierung des Motors und dem Betrieb der Last, gewählt werden.

In einer weiteren Ausgestaltung kann vorgesehen sein, dass ein Wechsel von dem Betrieb der Treiberschaltung zu dem Betrieb der Überbrückungsschaltung, oder umgekehrt vorzunehmen ist, der aktuelle Zustand für eine vorgegebene Zeitdauer beibehalten wird, bevor ein erneuter Wechsel des Betriebs erfolgen kann. Hierdurch kann eine zeitliche Bewertung des Ist-Zustands der Schaltbedingung realisiert werden. Wurde eine Schaltbedingung detektiert, so wird beim Vorsehen der zeitlichen Bewertung abgewartet, dass jeweils für eine vorgegebene Zeitspanne die Eingangsgröße (d.h. der erste oder zweite Leistungsfaktor, je nach Schaltbedingung) den vordefinierten Wertebereich nicht verlässt. Hierdurch kann insbesondere bei einem zyklischen Betrieb ein häufiges Hin- und Herschalten zwischen den Betriebsmodi verhindert werden, was zu einer zusätzlichen Belastung der Komponenten des Motorsystems führen würde.

Gemäß einer weiteren Ausgestaltung kann vorgesehen sein, dass eine erste Zeitdauer für den Wechsel von dem Betrieb der Treiberschaltung zu dem Betrieb der Überbrückungsschaltung einer zweiten Zeitdauer für den Wechsel von dem Betrieb der Überbrückungsschaltung zu dem Betrieb der Treiberschaltung entspricht oder unterschiedlich von dieser ist.

In einer weiteren Ausgestaltung ist vorgesehen, dass die Festlegung des ersten und des zweiten Leistungsfaktors und/oder der ersten und der zweiten Zeitdauer im Betrieb der Überbrückungsschaltung erfolgt. Im Betrieb der Überbrückungsschaltung wird der Motor mit einer konstanten Spannung betrieben, was die Festlegung der genannten Parameter erleichtert. Anschließend kann das oben beschriebene Betriebsverfahren durchgeführt werden.

In einer weiteren Ausgestaltung kann vorgesehen sein, dass ein Wechsel von dem Betrieb der Treiberschaltung zu dem Betrieb der Überbrückungsschaltung bei einer vordefinierten Mindestlast erfolgt.

Gemäß einem zweiten Aspekt der vorliegenden Erfindung ist ein Motorsystem mit einem Motor, einer Treiberschaltung zum Ansteuern des Motors, einer Steuereinheit und einer Überbrückungsschaltung vorgesehen. Die Steuereinheit ist mit der Treiberschaltung verbunden, um die Treiberschaltung während einer Einschaltphase anzusteuern, um einen Sanftanlauf des Motors auszuführen. Durch die Überbrückungsschaltung ist in einer Normalbetriebsphase die Treiberschaltung in Abhängigkeit von einer Last, mit der der Motor betrieben wird, überbrückbar. In der Normalbetriebsphase ist durch die Steuereinheit ein Wechsel zwischen dem Betrieb der Treiberschaltung und dem Betrieb der Überbrückungsschaltung in Abhängigkeit von einem Leistungsfaktor des Motors und einer Scheinleistung durchführbar.

Das Motorsystem weist die gleichen Vorteile auf, wie diese vorstehend in Verbindung mit dem erfindungsgemäßen Verfahren beschrieben wurden.

Gemäß einer Ausführungsform umfasst die Steuereinheit einen Regelkreis, durch den der Leistungsfaktor und die Scheinleistung als Stellgrößen beim Betrieb der Treiberschaltung verarbeitbar sind.

In einer weiteren Ausgestaltung ist durch die Steuereinheit der Leistungsfaktor zur Entscheidung, ob der Motor mit der Treiberschaltung oder der Überbrückungsschaltung betrieben wird, verarbeitbar.

In der Steuereinheit können ein erster und ein zweiter Leistungsfaktor hinterlegt sein, wobei der erste Leistungsfaktor höher gewählt ist als der zweite Leistungsfaktor. Die Steuereinheit kann ferner dazu ausgebildet sein, einen Wechsel von dem Betrieb der Treiberschaltung zu dem Betrieb der Überbrückungsschaltung bei dem ersten Leistungsfaktor vorzunehmen und einen Wechsel von dem Betrieb der Überbrückungsschaltung zu dem Betrieb der Treiberschaltung bei dem zweiten Leistungsfaktor vorzunehmen.

Weiterhin kann das Motorsystem dazu ausgebildet sein, dass bei der Feststellung, dass ein Wechsel von dem Betrieb der Treiberschaltung zu dem Betrieb der Überbrückungsschaltung, oder umgekehrt, vorzunehmen ist, der aktuelle Zustand für eine vorgegebene Zeitdauer beibehalten wird, innerhalb der das Kriterium für den Wechsel erfüllt sein muss, um den Wechsel des Betriebs zu bewirken.

Bevorzugte Ausführungsformen der Erfindung werden nachfolgend anhand der beigefügten Zeichnungen näher erläutert. Es zeigen:
- Fig. 1: ein Blockschaltbild eines erfindungsgemäßen Motorsystems;
- Fig. 2: ein Flussdiagramm zur Veranschaulichung des Verfahrens zum Betreiben eines Motorsystems der Erfindung;
- Fig. 3: einen Regelkreis zur Veranschaulichung des Verfahrens zum Betreiben eines erfindungsgemäßen Motorsystems;
- Fig. 4: eine Mehrzahl an exemplarischen Kennlinien zur Steuerwinkelberechnung, welche in einem Regelkreis gemäß Fig. 3 eingesetzt werden können;
- Fig. 5: eine schematische Darstellung der Realisierung einer Schalthysterese;
- Fig. 6: eine schematische Darstellung einer zeitlichen Bewertung beim Vorliegen einer Schaltbedingung; und
- Fig. 7 bis 9: Messungen der Wirkleistung, der Blindleistung und der Scheinleistung beim Betrieb mit der Überbrückungsschaltung, dem Betrieb mit der Treiberschaltung und einer daraus resultierenden Energieeinsparung in Abhängigkeit von einer Last.

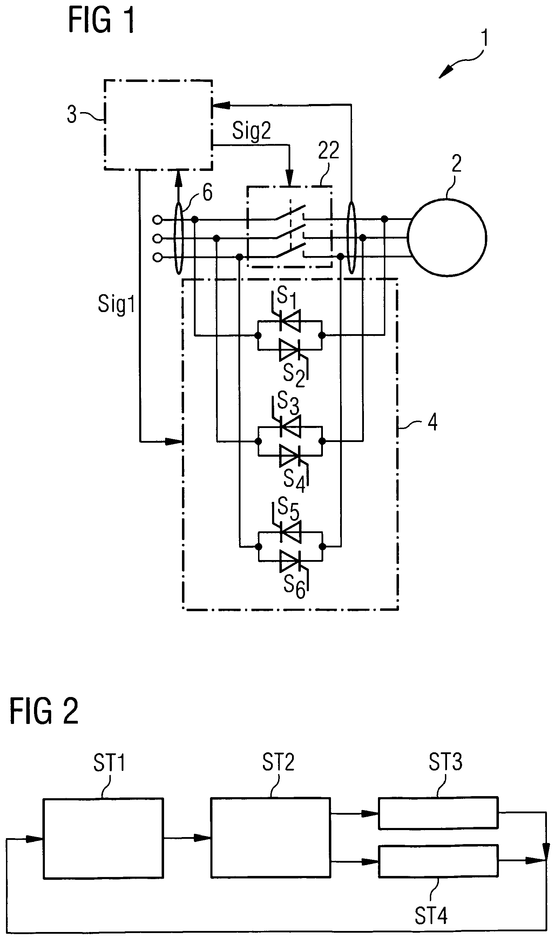

In Fig. 1 ist ein Blockschaltbild eines Motorsystems 1 dargestellt, das einen Elektromotor 2, z.B. einen Asynchronmotor mit Käfigläufer oder einen anderen bürstenlosen Motor aufweist. Der Motor 2 wird mit einer nicht dargestellten Wechselstromquelle betrieben und ist mit dieser entweder direkt über eine Überbrückungsschaltung 22, die entsprechend der Anzahl der Phasen drei Schalter umfasst, verbindbar oder über eine Treiberschaltung 4, die abhängig von einem Ansteuerwert Sig1 den Wechselstrom aus der Wechselstromwelle, z.B. durch eine Phasenanschnittsteuerung, modifiziert, um eine Teilleistung an dem Motor 2 anzulegen. Die Treiberschaltung 4 umfasst zu diesem Zweck sechs Halbleiterschaltelemente S₁, ..., S₆, z.B. in Gestalt von Thyristoren, wobei jeweils zwei der Halbleiterschaltelemente S₁, S₂; S₃, S₄; S₅, S₆ pro Phase antiparallel geschaltet sind.

Die Ansteuergröße Sig1 wird von einer Steuereinheit 3 bereitgestellt. Die Steuereinheit 3 ist weiterhin mit der Überbrückungsschaltung 22 verbunden, um diese mittels eines Steuersignals Sig2 zu schalten, so dass die Treiberschaltung 4 überbrückt wird oder nicht. Die Steuereinheit 3 ist mit einer Detektorschaltung 6 verbunden, die verschiedene Größen wie z.B. Strom, Spannung usw. in dem Motor 2 misst, um daraus verschiedene Kenngrößen des Motors 2 zu ermitteln.

In Fig. 2 ist ein Diagramm zur Verdeutlichung des Verfahrens zum Betreiben des Motorsystems 1 gemäß der Erfindung dargestellt. Die in Fig. 2 dargestellten Schritte werden dabei nach dem sog. Sanftanlauf des Motors durchgeführt. Im Sanftanlauf wird der Motor mit ansteigender Leistung bzw. Spannung angesteuert, so dass der Motor 2 ohne Rucken anläuft. Nach Beenden dieser Einschaltphase, welche mit Hilfe der Treiberschaltung 4 realisiert wird, wird in Schritt ST1 eine Lasterkennung durchgeführt. Dabei werden eine Scheinleistung S des Motors 2 sowie ein Leistungsfaktor γ, der sich aus dem Verhältnis der Wirkleistung zur Scheinleistung berechnet, herangezogen.

Abhängig von dem Ergebnis erfolgt im Schritt ST2 die Wahl der Betriebsart. Als Betriebsart steht ein Betrieb mit Treiberschaltung zur Verfügung, indem die an den Motor 2 anzulegende Spannung mittels des Steuersignals Sig1 durch die Steuereinheit 3 festgelegt werden kann. In diesem Betriebsmodus ist ein energiesparsamer Betrieb des Motors 2 möglich. In der anderen Betriebsart erfolgt ein Betrieb mit der Überbrückungsschaltung 22, nämlich dann, wenn die an dem Motor 2 anliegende Last der Nennlast entspricht oder eine definierte Mindestlast, z.B. 50 % Nennlast, überschreitet. In dem Diagramm der Fig. 2 repräsentiert Schritt ST3 den Betrieb der Treiberschaltung 4 und Schritt ST4 den Betrieb der Überbrückungsschaltung 22. Nachdem die entsprechende Wahl in Schritt ST2 getroffen wurde und durch die Steuereinheit 3 entsprechende Steuersignale Sig1 und Sig2 an die Treiberschaltung 4 und die Überbrückungsschaltung 22 abgegeben wurden, wird Schritt ST1 mit der Lasterkennung wiederholt.

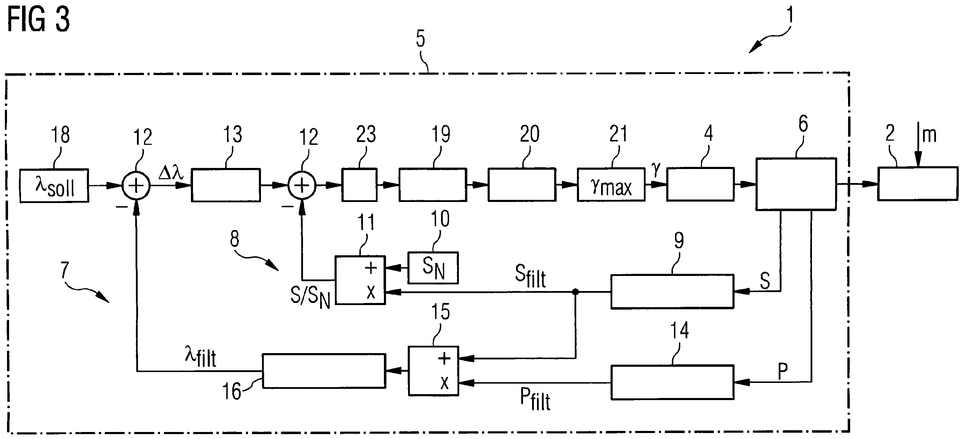

Die Optimierung des Betriebs des Motors 2 erfolgt durch einen in der Steuereinheit 3 realisierten Regelkreis, welcher schematisch in Fig. 3 dargestellt ist. Durch den Regelkreis 5 kann nicht nur eine Optimierung des Betriebs der Treiberschaltung 4, z.B. durch einen spannungsabsenkenden Phasenanschnitt, während einer Niedriglast bestimmt werden, sondern darüber hinaus eine Optimierung des Zustandswechsel zwischen dem Betrieb der Treiberschaltung 4 und dem Betrieb der Überbrückungsschaltung 22 vorgenommen werden.

Der Optimierung des Betriebs der Treiberschaltung 4 liegen dabei folgende Überlegungen zugrunde.

Bei Leerlauf oder niedriger Last des Motors ist ein Betrieb der Treiberschaltung, z.B. unter Nutzung eines Phasenanschnitts zur Absenkung der Spannung an den Phasen des Motors, vorgesehen. In dieser Betriebsart liegt der Betriebsstrom deutlich unterhalb des Nennstroms des Motors. Die Verlustleistung wird reduziert und auch der Blindleistungsbedarf des Motors 2. Diese Betriebsart (Betrieb der Treiberschaltung, d.h. Ansteuerung der Treiberschaltung durch die Steuereinheit 3) stellt einen optimierten Betrieb im Sinne der Energieeffizienz dar.

Bei Betrieb mit Nennlast oder einer vorgegebenen Mindestlast, z.B. 50 % Nennlast, soll der Betrieb der Überbrückungsschaltung 22 zur Optimierung der Verlustleistung der Treiberschaltung 4 durchgeführt werden. Bei wechselnden Lasten des Motors 2, insbesondere bei zyklisch wechselnden Lasten, soll zwischen diesen beiden Modi (Betrieb der Treiberschaltung 4 bzw. Betrieb der Überbrückungsschaltung 22) umgeschaltet werden, um jeden Arbeitspunkt einen optimalen Betrieb zu gewährleisten. Die Erkennung der Lastwechsel geschieht auf Basis der Berechnung des Leistungsfaktors λ und der Scheinleistung mittels des nachfolgend beschriebenen Regelkreises 5.

Wie unschwer zu erkennen ist, ist die Treiberschaltung 4, die einen optimierten Betrieb des Motors 2 ermöglicht, Bestandteil des Regelkreises 5. Zwischen der Treiberschaltung 4 und dem Motor 2 ist die in Verbindung mit Fig. 1 bereits erwähnte Detektorschaltung 6 vorgesehen, welche je Periode einen Strom und einen Spannungswert (allgemein elektrische Größen) misst. Die Detektorschaltung 6 ermittelt aus den gemessenen elektrischen Größen eine Scheinleistung S und eine Wirkleistung P. Die Scheinleistung S wird in einem inneren Regelkreis 8, die Wirkleistung P in einem äußeren Regelkreis 7 verarbeitet. Der innere Regelkreis stellt eine schnelle Regelschleife dar, welche es erlaubt, auf abrupte Laständerungen der an dem Motor 2 anliegenden Last m zu reagieren. Die äußere Regelschleife 7 stellt demgegenüber eine langsame Regelschleife dar, welche einen Ansteuerparameter für die Treiberschaltung 4 ermittelt und damit den energieoptimierten Betrieb primär regelt.

Die von der Detektorschaltung 6 ermittelte Scheinleistung S wird einem Filter 9 der inneren Regelschleife 8 und die Wirkleistung P wird einem Filter 14 der äußeren Regelschleife 7 zugeführt. Die gefilterte Scheinleistung S_{filt} und die gefilterte Wirkleistung P_{filt} werden einem Teiler 15 der äußeren Regelschleife 7 zugeführt. Durch den Teiler 15 wird der Leistungsfaktor A, der sich aus dem Verhältnis von Wirkleistung P_{filt} zur Scheinleistung S_{filt} zusammensetzt, ermittelt. Der Leistungsfaktor λ wird einem Filter 16 zugeführt. Der gefilterte Leistungsfaktor A_{filt} wird in einem Differenzglied 17 mit einem vorgegebenen Steuerwinkel Aₛₒₗₗ (Block 18) verrechnet. Die Differenz Δλ wird einem Energiesparregler 13, z.B. einem PI-Regler zugeführt. Der Ausgangswert des Energiesparreglers 13 stellt eine normierte Größe für den Steuerwinkel γ dar, welcher im Ergebnis der Treiberschaltung 4, z.B. einem Drehstromsteller, in Gestalt des Steuersignals Sig1 (Fig. 1) als Steuergröße zugeführt wird.

Der normierte Steuerwinkel wird in einem Differenzglied 12 mit dem Verhältnis einer vorgegebenen Nennscheinleistung S_{N} (Bezugszeichen 10) und der gefilterten Scheinleistung S_{filt} verrechnet. Das Ergebnis des Differenzglieds 12 wird einem Lastregler 23, z.B. einem P-Regler zugeführt. Der Ausgang des Reglers 23 wird einer Einheit 19 zur Berechnung des Steuerwinkels γ zugeführt. Das Ergebnis der Einheit 19 wird in einem Filter 20 gefiltert. Der gefilterte Steuerwinkel wird einem optionalen Begrenzer 21 zugeführt. Dabei wird sichergestellt, dass der errechnete Steuerwinkel γ nicht einen Maximal-Winkel γₘₐₓ übersteigt. Der nunmehr vorliegende Steuerwinkel γ wird dann der Treiberschaltung 4 zur Ansteuerung des Motors 2 zugeführt.

Die Optimierung macht sich, wie erwähnt, in einer Spannungsabsenkung bemerkbar. Als Maß für den Grad der Spannungsabsenkung kann das Verhältnis der Speisespannung zur Nennspannung definiert werden. Der realisierbare Grad der Spannungsabsenkung ergibt sich entsprechend des beschriebenen Regelkreises aus der Belastung m des Motors 2.

Der Leistungsfaktor λ stellt ein Maß für den Belastungszustand des Motors 2 bei Betrieb mit konstanter Speisespannung dar. Ein großer Leistungsfaktor nahe 1 entspricht dem Nennbetrieb, ein kleiner Leistungsfaktor z.B. zwischen 0,1 und 0,4 - je nach Motor - dem Leerlauf. Der Leistungsfaktor λ dient als Regelgröße und wird, wie beschrieben, in der äußeren Regelschleife 7 im Regelkreis 5 zurückgeführt. Als weitere Regelgröße dient die Scheinleistung S, welche im inneren Regelkreis 8 verarbeitet wird. Die Scheinleistung S dient als Indikator für den Belastungszustand.

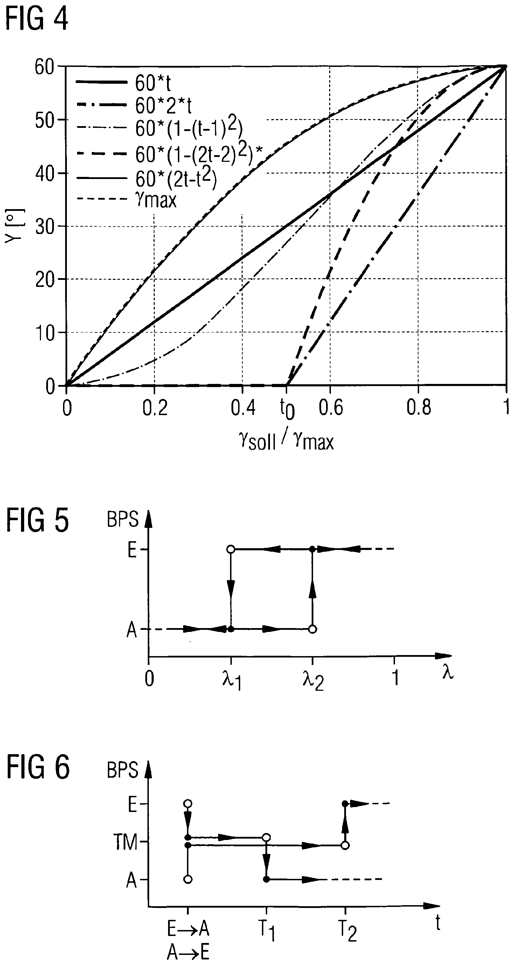

Zur Berechnung des Steuerwinkels γ, der einen Strompausenwinkel (= der Winkel zwischen positiver und negativer Halbwelle eines Stroms) dargestellt, wird eine wie in Fig. 4 dargestellte Kennlinie verwendet. Die in Fig. 4 dargestellten Kennlinien stellen Funktionen zum Umrechnen eines normierten Winkels auf einen Phasenanschnittwinkel, d.h. γ, dar. Die Kennlinien sind empirisch ermittelt und sind vorgegeben. Es ist ausreichend, wenn eine der in Fig. 4 gezeigten Kennlinien in dem Regelkreis hinterlegt sind. Die entsprechenden Daten werden in der Einheit 19 bereitgestellt bzw. verarbeitet.

Um bei einer zyklischen oder häufig wechselnden Last m des Motors 2 ein häufiges Hin- und Herschalten zwischen dem Betrieb der Treiberschaltung 4 und dem Betrieb der Überbrückungsschaltung 22 zu vermeiden, kann zusätzlich in dem Regelkreis 5 eine Schalthysterese, wie diese in Fig. 5 gezeigt ist, vorgesehen werden. In diesem Fall werden für die Wahl der Betriebsart BPS eine erste und eine zweite Schaltstelle λ₁, λ₂ (alternativ können erste und zweite Scheinleistungen definiert werden) festgelegt. λ₂ kennzeichnet eine minimale Einschaltschwelle, d.h. denjenigen Leistungsfaktor, bei dem von einem Betrieb A mit Treiberschaltung zu einem Betrieb E mit Überbrückungsschaltung übergegangen wird. λ₁ kennzeichnet die maximale Ausschaltschwelle, die kleiner als λ₂ ist. λ₁ kennzeichnet denjenigen Leistungsfaktor, bei dem von dem Betrieb E mit Überbrückungsschaltung zu dem Betrieb A mit Treiberschaltung übergegangen wird. λ₂ kann beispielsweise bei 80 % des Nennleistungsfaktors des Motors liegen. λ₁ kann beispielsweise bei etwa 60 % des Nennleistungsfaktors des Motors liegen.

Zusätzlich kann eine zeitliche Bewertung des Ist-Zustands der Schaltbedingung vorgesehen werden, wie dies in Fig. 6 illustriert ist. Bei einem Wechsel von einem Betrieb A mit Treiberschaltung zu einem Betrieb E mit Überbrückungsschaltung (E→A), oder umgekehrt (A→E), startet ein Timer TM. In der Fig. 6 ist dies z.B. zum Zeitpunkt t=0 der Fall. Frühestens nach dem Ablauf vorgegebener Zeitspannen T₁ oder T₂ führt das Verlassen der Eingangsgröße des zuvor definierten Wertbereichs tatsächlich zu einem Umschaltvorgang in den jeweils anderen Betriebsmodus.

Die Zeitspanne T₁ ist in dem vorliegenden Ausführungsbeispiel dem Wechsel von einem Betrieb E mit Überbrückungsschaltung zu einem Betrieb A mit Treiberschaltung zugeordnet. In der Fig. 6 wird davon ausgegangen, dass die Eingangsgröße, d.h. der Leistungsfaktor A, den zuvor definierten Wertbereich nicht verlassen hat, weswegen zum Zeitpunkt t=T₁ der Wechsel vom Betrieb E mit Überbrückungsschaltung zum Betrieb A mit Treiberschaltung erfolgt.

Die Zeitspanne T₂, die einem Wechsel vom Betrieb A mit Treiberschaltung zu einem Betrieb E mit Überbrückungsschaltung zugeordnet ist, ist länger als die Zeitspanne T₁ gewählt. Auch in diesem Beispiel wird davon ausgegangen, dass der Leistungsfaktor λ den zuvor definierten Wertbereich nicht verlässt, weswegen zum Zeitpunkt t=T₂ ein Wechsel des Betriebs vom Betrieb A mit Treiberschaltung zum Betrieb E mit Überbrückungsschaltung erfolgt.

Diese Vorgehensweise ist insbesondere bei einem zyklischen Wechsel der Last m zwischen zwei Arbeitspunkten zweckmäßig, um ein permanentes Hin- und Herschalten zwischen den zwei Betriebsmodi zu vermeiden.

Die Wahl der Parameter, d.h. von dem ersten Steuerwinkel λ₁, dem zweiten Steuerwinkel λ₂, der ersten Zeitspanne T₁ und der zweiten Zeitspanne T₂ für den Betrieb A mit Treiberschaltung kann zunächst durch eine Lasterkennung bei eingeschaltetem Überbrückungsschutz (d.h. Betrieb der Überbrückungsschaltung) und damit konstanter Spannung erfolgen. Die Detektion der Leistungsfaktoren kann hier für beide Arbeitspunkte zunächst ohne Spannungsabsenkung erfolgen. Dies erleichtert die Abschätzung des Potentials für die Energieeinsparung. Die Optimierung selbst erfolgt dann im Anschluss durch die Spannungsabsenkung im Betrieb A mit Treiberschaltung.

Das vorgeschlagene Vorgehen kombiniert die Vorteile einer Spannungsabsenkung durch eine Treiberschaltung zur Optimierung der Leistungsaufnahme des Motors mit einem energieoptimalen Betrieb der Treiberschaltung. Insbesondere wird für Lastwechsel zwischen Leerlauf und Nennlastbetrieb die Energiebilanz des Motorsystems 1 gegenüber einem herkömmlichen Betrieb mit permanent aktivierter Überbrückungsschaltung optimiert.

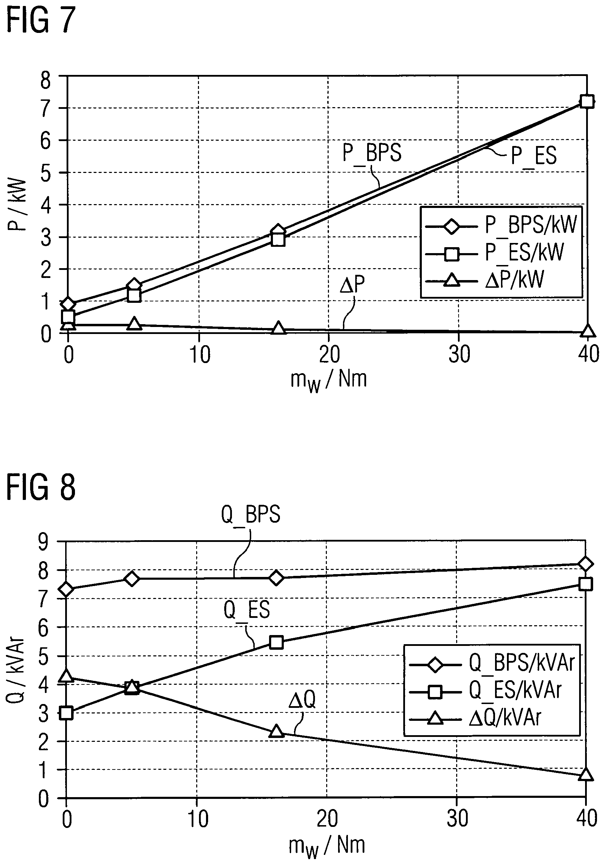

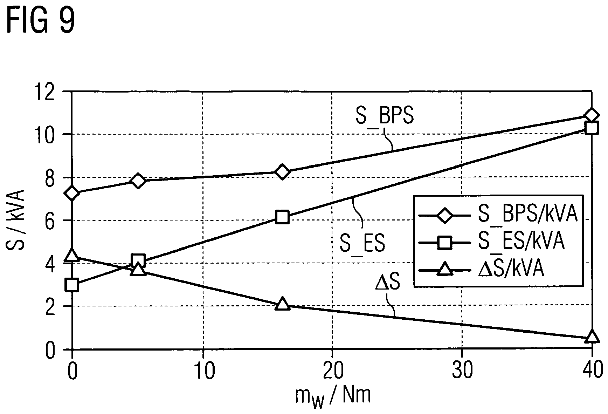

Die Figuren 7 bis 9 zeigen Messergebnisse zur Bilanzierung der Änderung von Wirkleistung (Fig. 7), Blindleistung (Fig. 8) und Scheinleistung (Fig. 9) bei Nutzung des beschriebenen optimierten Verfahrens (in den Figuren mit _ES gekennzeichnet) gegenüber einem permanenten Betrieb der Überbrückungsschaltung (in den Figuren mit _BPS gekennzeichnet). Dabei ist zu erkennen, dass sich nur im unteren Teillastbereich Einsparungen erzielen lassen. Folglich kann hier für ein Lastmoment, z.B. größer als 30 Nm, auf den Betrieb mit Überbrückungsschaltung umgeschaltet werden.

## Patentansprüche

1. Verfahren zum Betreiben eines Motorsystems (1) mit einer Treiberschaltung (4) und einem Elektromotor (2), wobei die Treiberschaltung (4) während einer Einschaltphase betrieben wird, um einen Sanftanlauf des Elektromotors (2) auszuführen, und wobei die Treiberschaltung (4) in einer Normalbetriebsphase in Abhängigkeit von einer Last (m), mit der der Elektromotor (2) betrieben wird, mit einer Überbrückungsschaltung (22) überbrückbar ist,
**dadurch gekennzeichnet, dass**
in der Normalbetriebsphase ein Wechsel zwischen dem Betrieb der Treiberschaltung (4) und dem Betrieb der Überbrückungsschaltung (22) in Abhängigkeit von einem Leistungsfaktor (λ) des Elektromotors (2) und einer Scheinleistung (S) erfolgt.

2. Verfahren nach Anspruch 1, **dadurch gekennzeichnet, dass** der Leistungsfaktor (λ) und die Scheinleistung (S) als Stellgrößen in einem Regelkreis beim Betrieb der Treiberschaltung (4) verarbeitet werden.

3. Verfahren nach Anspruch 1 oder 2, **dadurch gekennzeichnet, dass** der Leistungsfaktor (λ) zur Entscheidung, ob der Elektromotor (2) mit der Treiberschaltung (4) oder der Überbrückungsschaltung (22) betrieben wird, verarbeitet wird.

4. Verfahren nach einem der vorhergehenden Ansprüche, **dadurch gekennzeichnet, dass** ein Wechsel von dem Betrieb der Treiberschaltung (4) zu dem Betrieb der Überbrückungsschaltung (22) bei einem ersten, vordefinierten Leistungsfaktor (λ₁) erfolgt und ein Wechsel von dem Betrieb der Überbrückungsschaltung (22) zu dem Betrieb der Treiberschaltung (4) bei einem zweiten, vordefinierten Leistungsfaktor (λ₂) erfolgt, wobei der erste Leistungsfaktor (λ₁) höher gewählt ist als der zweite Leistungsfaktor (λ₂).

5. Verfahren nach Anspruch 4, **dadurch gekennzeichnet, dass** der erste Leistungsfaktor (λ₁) bei 80% des Nennleistungsfaktors des Elektromotors (2) liegt.

6. Verfahren nach Anspruch 4 oder 5, **dadurch gekennzeichnet, dass** der zweite Leistungsfaktor (λ₂) bei 60% des Nennleistungsfaktors des Elektromotors (2) liegt.

7. Verfahren nach einem der vorhergehenden Ansprüche, **dadurch gekennzeichnet, dass** nach einem Wechsel von dem Betrieb der Treiberschaltung (4) zu dem Betrieb der Überbrückungsschaltung (22), oder umgekehrt, der aktuelle Zustand für eine vorgegebene Zeitdauer (T₁, T₂) beibehalten wird, bevor ein erneuter Wechsel des Betriebs erfolgen kann.

8. Verfahren nach Anspruch 7, **dadurch gekennzeichnet, dass** eine erste Zeitdauer (T₁) für den Wechsel von dem Betrieb der Treiberschaltung (4) zu dem Betrieb der Überbrückungsschaltung (22) einer zweiten Zeitdauer (T₂) für den Wechsel von dem Betrieb der Überbrückungsschaltung (22) zu dem Betrieb der Treiberschaltung (4) entsprechen kann oder unterschiedlich von dieser sein kann.

9. Verfahren nach Anspruch 8, **dadurch gekennzeichnet, dass** die Festlegung des ersten und des zweiten Leistungsfaktors (λ₁, λ₂) und/oder der ersten und der zweiten Zeitdauer (T₁, T₂) im Betrieb der Überbrückungsschaltung (22) erfolgt.

10. Verfahren nach einem der vorhergehenden Ansprüche, **dadurch gekennzeichnet, dass** ein Wechsel von dem Betrieb der Treiberschaltung (4) zu dem Betrieb der Überbrückungsschaltung (22) bei einer vordefinierten Mindestlast erfolgt.

11. Motorsystem (1), umfassend:
- einen Elektromotor (2);
- eine Treiberschaltung (4) zum Ansteuern des Elektromotors (2) ;
- eine Steuereinheit (3), die mit der Treiberschaltung (4) verbunden ist, um die Treiberschaltung (4) während einer Einschaltphase anzusteuern, um einen Sanftanlauf des Elektromotors (2) auszuführen;
- eine Überbrückungsschaltung (22), mit der in einer Normalbetriebsphase die Treiberschaltung (4) in Abhängigkeit von einer Last (m), mit der der Elektromotor (2) betrieben wird, überbrückbar ist;
**dadurch gekennzeichnet, dass**
dieses dazu ausgebildet ist, in der Normalbetriebsphase durch die Steuereinheit (3) einen Wechsel zwischen dem Betrieb der Treiberschaltung (4) und dem Betrieb der Überbrückungsschaltung (22) in Abhängigkeit von einem Leistungsfaktor (A) des Elektromotors (2) und einer Scheinleistung (S) durchzuführen.

12. Motorsystem (1) nach Anspruch 11, **dadurch gekennzeichnet, dass** die Steuereinheit (3) einen Regelkreis (5) umfasst, durch den der Leistungsfaktor (A) und die Scheinleistung (S) als Stellgrößen beim Betrieb der Treiberschaltung (4) verarbeitbar sind.

13. Motorsystem (1) nach Anspruch 11 oder 12, **dadurch gekennzeichnet, dass** die Steuereinheit (3) dazu ausgebildet ist, den Leistungsfaktor (λ) zur Entscheidung, ob der Elektromotor (2) mit der Treiberschaltung (4) oder der Überbrückungsschaltung (22) betrieben wird, zu verarbeiten.

14. Motorsystem (1) nach einem der Ansprüche 11 bis 13, **dadurch gekennzeichnet, dass** in der Steuereinheit (3) ein erster und ein zweiter Leistungsfaktor (λ₁, λ₂) hinterlegt sind, wobei der erste Leistungsfaktor (λ₁) höher gewählt ist als der zweite Leistungsfaktor (λ₂), und dass die Steuereinheit (3) dazu ausgebildet ist, einen Wechsel von dem Betrieb der Treiberschaltung (4) zu dem Betrieb der Überbrückungsschaltung (22) bei dem ersten Leistungsfaktor (λ₁) vorzunehmen und einen Wechsel von dem Betrieb der Überbrückungsschaltung (22) zu dem Betrieb der Treiberschaltung (4) bei dem zweiten Leistungsfaktor (λ₂) vorzunehmen.

15. Motorsystem (1) nach einem der Ansprüche 11 bis 14, **dadurch gekennzeichnet, dass** nach einem Wechsel von dem Betrieb der Treiberschaltung (4) zu dem Betrieb der Überbrückungsschaltung (22), oder umgekehrt, der aktuelle Zustand für eine vorgegebene Zeitdauer (T₁, T₂) beibehalten wird, bevor ein erneuter Wechsel des Betriebs erfolgen kann.

## Claims

1. Method for operating a motor system (1) with a driver circuit (4) and an electric motor (2), wherein the driver circuit (4) is operated during a switch-on phase, in order to carry out a soft start of the electric motor (2) and wherein in a normal operating phase the driver circuit (4) can be bridged with a bridging circuit (22) as a function of a load (m) with which the electric motor (2) is operated, **characterised in that**
in the normal operating phase a changeover takes place between the operation of the driver circuit (4) and the operation of the bridging circuit (22) as a function of a power factor (λ) of the electric motor (2) and an apparent power (S).

2. Method according to claim 1, **characterised in that** the power factor (λ) and the apparent power (S) are processed as manipulated variables in a control loop during operation of the driver circuit (4).

3. Method according to claim 1 or 2, **characterised in that** the power factor (λ) is processed in order to decide whether the electric motor (2) is operated with the driver circuit (4) or the bridging circuit (22).

4. Method according to one of the preceding claims, **characterised in that** a changeover takes place from the operation of the driver circuit (4) to the operation of the bridging circuit (22) with a first, predefined power factor (λ₁) and a changeover takes place from the operation of the bridging circuit (22) to the operation of the driver circuit (4) with a second, predefined power factor (λ₂), wherein the first power factor (λ₁) is selected to be higher than the second power factor (λ₂).

5. Method according to claim 4, **characterised in that** the first power factor (λ₁) is at 80% of the rated power factor of the electric motor (2).

6. Method according to claim 4 or 5, **characterised in that** the second power factor (λ₂) is at 60% of the rated power factor of the electric motor (2).

7. Method according to one of the preceding claims, **characterised in that** following a changeover from the operation of the driver circuit (4) to the operation of the bridging circuit (22), or vice versa, the current state is retained for a predetermined period of time (*T*₁,*T*₂) before the operation can be changed over again.

8. Method according to claim 7, **characterised in that** a first period of time (*T*₁) for the changeover from the operation of the driver circuit (4) to the operation of the bridging circuit (22) can correspond to a second period of time (*T*₂) for the changeover from the operation of the bridging circuit (22) to the operation of the driver circuit (4) or may differ herefrom.

9. Method according to claim 8, **characterised in that** the determination of the first and second power factor (λ₁,λ₂) and/or the first and second period of time (*T*₁,*T*₂) is carried out during operation of the bridging circuit (22).

10. Method according to one of the preceding claims, **characterised in that** a changeover from the operation of the driver circuit (4) to the operation of the bridging circuit (22) takes place with a predefined minimum load.

11. Motor system (1), comprising:
- an electric motor (2);
- a driver circuit (4) for controlling the electric motor (2) ;
- a control unit (3) which is connected to the driver circuit (4) in order to control the driver circuit (4) during a switch-on phase, in order to carry out a soft start of the electric motor (2);
- a bridging circuit (22), with which in a normal operating phase the driver circuit (4) can be bridged as a function of a load (m), with which the electric motor (2) is operated;
**characterised in that**
this is embodied, in the normal operating phase by means of the control unit (3), to carry out a changeover between the operation of the driver circuit (4) and the operation of the bridging circuit (22) as a function of a power factor (λ) of the electric motor (2) and an apparent power (S).

12. Motor system (1) according to claim 11, **characterised in that** the control unit (3) comprises a control loop (5), by means of which the power factor (λ) and the apparent power (S) can be processed as manipulated variables during operation of the driver circuit (4).

13. Motor system (1) according to claim 11 or 12, **characterised in that** the control unit (3) is embodied to process the power factor (λ) in order to decide whether the electric motor (2) is operated with the driver circuit (4) or the bridging circuit (22).

14. Motor system (1) according to one of claims 11 to 13, **characterised in that** a first and a second power factor (λ₁,λ₂) are stored in the control unit (3), wherein the first power factor (λ₁) is selected to be higher than the second power factor (λ₂), and that the control unit (3) is embodied to perform a changeover from the operation of the driver circuit (4) to the operation of the bridging circuit (22) with the first power factor (λ₁) and to perform a changeover from the operation of the bridging circuit (22) to the operation of the driver circuit (4) with the second power factor (λ₂).

15. Motor system (1) according to one of claims 11 to 14, **characterised in that** following a changeover from the operation of the driver circuit (4) to the operation of the bridging circuit (22), or vice versa, the current state is retained for a predetermined period of time (*T*₁,*T*₂), before the operation can be changed over again.

## Revendications

1. Procédé pour faire fonctionner un système (1) à moteur, comprenant un circuit (4) d'excitation et un moteur (2) électrique, dans lequel on fait fonctionner le circuit (4) d'excitation pendant une phase de mise en circuit pour réaliser un démarrage en douceur du moteur (2) électrique et dans lequel le circuit (4) d'excitation peut être shunté par un circuit (22) de shuntage dans une phase de fonctionnement normal en fonction d'une charge (m) avec laquelle on fait fonctionner le moteur (2) électrique,
**caractérisé en ce que**
dans la phase de fonctionnement normal, un passage entre le fonctionnement du circuit (4) d'excitation et le fonctionnement du circuit (22) de shuntage a lieu en fonction d'un facteur (λ) de puissance du moteur (2) électrique et d'une puissance (S) apparente.

2. Procédé suivant la revendication 1, **caractérisé en ce que** l'on traite le facteur (λ) de puissance et la puissance (S) apparente comme grandeurs de réglage dans un circuit de régulation lors du fonctionnement du circuit (4) d'excitation.

3. Procédé suivant la revendication 1 ou 2, **caractérisé en ce que** l'on traite le facteur (λ) de puissance pour décider si l'on fait fonctionner le moteur (2) électrique avec le circuit (4) d'excitation ou avec le circuit (22) de shuntage.

4. Procédé suivant l'une des revendications précédentes, **caractérisé en ce qu'**un passage du fonctionnement du circuit (4) d'excitation au fonctionnement du circuit (22) de shuntage a lieu à un premier facteur (λ₁) de puissance défini à l'avance et un passage du fonctionnement du circuit (22) de shuntage au fonctionnement du circuit (4) d'excitation a lieu à un deuxième facteur (λ₂) de puissance défini à l'avance, le premier facteur (λ₁) de puissance étant choisi plus grand que le deuxième facteur (λ₂) de puissance.

5. Procédé suivant la revendication 4, **caractérisé en ce que** le premier facteur (λ₁) de puissance représente 80% du facteur de puissance nominal du moteur (2) électrique.

6. Procédé suivant la revendication 4 ou 5, **caractérisé en ce que** le deuxième facteur (λ₂) de puissance représente 60% du facteur de puissance nominal du moteur (2) électrique.

7. Procédé suivant l'une des revendications précédentes, **caractérisé en ce qu'**après un passage du fonctionnement du circuit (4) d'excitation au fonctionnement du circuit (22) de shuntage ou inversement, on conserve l'état instantané pendant une durée (T₁, T₂) donnée à l'avance avant de pouvoir effectuer un nouveau changement du fonctionnement.

8. Procédé suivant la revendication 7, **caractérisé en ce qu'**une première durée (T₁), pour le passage du fonctionnement du circuit (4) d'excitation au fonctionnement du circuit (22) de shuntage, peut correspondre à une deuxième durée (T₂), pour le passage du fonctionnement du circuit (22) de shuntage au fonctionnement du circuit (4) d'excitation ou peut en être différente.

9. Procédé suivant la revendication 8, **caractérisé en ce que** la fixation du premier et du deuxième facteur (λ_{1,} λ₂) de puissance et/ou de la première et de la deuxième durée (T₁, T₂) a lieu au cours du fonctionnement du circuit (22) de shuntage.

10. Procédé suivant l'une des revendications précédentes, **caractérisé en ce qu'**un passage du fonctionnement du circuit (4) d'excitation au fonctionnement du circuit (22) de shuntage a lieu à une charge minimum définie à l'avance.

11. Système (1) à moteur, comprenant :
- un moteur (2) électrique;
- un circuit (4) d'excitation pour exciter le moteur (2) électrique;
- une unité (3) de commande, qui est reliée au circuit (4) d'excitation pour commander le circuit (4) d'excitation pendant une phase de mise en circuit, afin de réaliser un démarrage en douceur du moteur (2) électrique;
- un circuit (22) de shuntage par lequel, dans une phase de fonctionnement normale, le circuit (4) d'excitation peut être shunté en fonction d'une charge (m) avec laquelle on fait fonctionner le moteur (2) électrique;
**caractérisé en ce que**
celui-ci est constitué pour effectuer, dans la phase de fonctionnement normale, par l'unité (3) de commande, un passage entre le fonctionnement du circuit (4) d'excitation et le fonctionnement du circuit (22) de shuntage, en fonction d'un facteur (λ) de puissance du moteur (2) électrique et d'une puissance (S) apparente.

12. Système (1) à moteur suivant la revendication 11, **caractérisé en ce que** l'unité (3) de commande comprend un circuit (S) de régulation, par lequel le facteur (λ) de puissance et la puissance (S) apparente peuvent être traités comme grandeurs de réglage lors du fonctionnement du circuit (4) d'excitation.

13. Système (1) à moteur suivant la revendication 11 ou 12, **caractérisé en ce que** l'unité (3) de commande est constituée pour traiter le facteur (λ) de puissance, afin de décider si l'on fait fonctionner le moteur (2) électrique avec le circuit (4) d'excitation ou avec le circuit (22) de shuntage.

14. Système (1) à moteur suivant l'une des revendications 11 à 13, **caractérisé en ce que**, dans l'unité (3) de commande, sont mémorisés un premier et un deuxième facteur (λ₁, λ₂) de puissance, le premier facteur (λ₁) étant choisi plus grand que le deuxième facteur (λ₂) de puissance, et **en ce que** l'unité (3) de commande est constituée pour effectuer un passage du fonctionnement du circuit (4) d'excitation au fonctionnement du circuit (22) de shuntage au premier facteur (λ₁) de puissance et un passage du fonctionnement du circuit (22) de shuntage au fonctionnement du circuit (4) d'excitation au deuxième facteur (λ₂) de puissance.

15. Système (1) à moteur suivant l'une des revendications 11 à 14, **caractérisé en ce qu'**après un passage du fonctionnement du circuit (4) d'excitation au fonctionnement du circuit (22) de shuntage ou inversement, on conserve l'état instantané pendant une durée (T₁, T₂) donnée à l'avance, avant de pouvoir effectuer un changement nouveau du fonctionnement.
